# FASCICULE DE BREVET EUROPEEN

(11) **EP 1 754 315 B1**
(45) Date de publication et mention de la délivrance du brevet: **06.08.2014**
(21) Numéro de dépôt: 05761139.4
(22) Date de dépôt: 07.06.2005
(51) Int. Cl.: H04B 1/707, H01Q 9/28, H01Q 5/00, H01Q 15/00, H04B 1/7163

(54) **DISPOSITIF RAYONNANT COMPRENANT AU MOINS UN FILTRE REJECTEUR ADAPTATIF ET ANTENNE COMPRENANT CE DISPOSITIF**
STRAHLUNGSVORRICHTUNG MIT MINDESTENS EINEM ADAPTIVEN UNTERDRÜCKUNGSFILTER UND ANTENNE MIT DIESER VORRICHTUNG
RADIATING DEVICE COMPRISING AT LEAST ONE ADAPTIVE REJECTION FILTER AND ANTENNA PROVIDED WITH SAID DEVICE

(30) Priorité: 09.06.2004 FR 0451147
(43) Date de publication de la demande: 21.02.2007
(73) Titulaire: Thomson Licensing SA, 92130 Issy-les-Moulineaux (FR)
(72) Inventeur: THUDOR, Franck, F-35000 Rennes (FR); ROBERT, Jean-Luc, F-35830 Betton (FR); LE NAOUR, Jean-Yves, F-35740 Pace (FR)
(74) Mandataire: Huchet, Anne
(86) Numéro de dépôt international: PCT/EP2005/052618
(87) Numéro de publication internationale: WO 2005/125034

(56) Documents cités:
- WO-A-03/103090
- US-A- 5 974 101
- US-A1- 2002 154 614
- US-A1- 2003 090 436
- US-A1- 2003 122 721
- SCHANTZ H G ET AL: "Frequency notched UWB antennas" 2003 IEEE CONFERENCE ON ULTRA WIDEBAND SYSTEMS AND TECHNOLOGIES, 16 novembre 2003 (2003-11-16), pages 214-218, XP010683760 PISCATAWAY, NJ, USA
- KERKHOFF A ET AL: "Design of a planar monopole antenna for use with ultra-wideband (uwb) having a band-notched characteristic" IEEE ANTENNAS AND PROPAGATION SOCIETY INTERNATIONAL SYMPOSIUM. 2003 DIGEST. APS. COLUMBUS, OH, JUNE 22 - 27, 2003, NEW YORK, NY : IEEE, US, vol. VOL. 4 OF 4, 22 juin 2003 (2003-06-22), pages 830-833, XP010649592 ISBN: 0-7803-7846-6

## Description

La présente invention se rapporte à un dispositif rayonnant comprenant au moins un filtre réjecteur adaptatif et à une antenne comprenant ce dispositif. Cette invention s'applique notamment dans les communications sans fils utilisant des hautes fréquences.

Aujourd'hui, il existe de nombreuses techniques de communication sans fil pour la transmission de données numériques. La majorité des techniques conventionnelles consistent à moduler une porteuse haute fréquence par ces données numériques.

Le signal résultant est ensuite amplifié puis transmis à l'antenne d'émission. En réception, l'opération inverse est réalisée.

D'autres techniques de transmission de l'information existent, notamment une technique reposant sur l'émission de trains d'impulsions gaussiennes de très courte durée (de l'ordre de 500 ps) dont on contrôle avec précision la récurrence. L'information utile à transmettre est contenue dans l'évolution de la période entre les impulsions consécutives.

Cette technique de communication est appelée modulation de position d'impulsions (en anglais 'Pulse Position Modulation' dont les sigles sont PPM). Elle permet une transmission sans porteuse de données à haut débit avec des puissances d'émission relativement faibles (inférieures au milli-Watt), la forme d'onde de l'impulsion utilisée conduisant à un signal ayant une très large bande dans le domaine fréquentiel.

Des organismes de standardisation sont en cours de création sur la base de cette technique PPM d'un standard UWB (en anglais 'Ultra Wide Band' pour Large Bande de Hautes Fréquence).

Ces organismes ont déjà adopté des critères de limitations tant au niveau de la puissance émise que de l'encombrement fréquentiel afin de réduire les possibilités d'interférences avec les nombreux moyens de communications déjà déployés.

Ainsi, la plage fréquentielle réservée aux communications sans fil UWB a été limitée à [3,1GHz ; 10,6GHz] avec une Puissance Isotrope Rayonnée Equivalente (PIRE) maximale de -41dBm/Mhz soit - 2,25dBm sur la largeur de bande autorisée.

Mais un problème important se pose avec certains systèmes de transmissions sans fils utilisant une partie de la bande de fréquence allouée, notamment entre 5GHz et 6GHz.

Ainsi, d'autres standards, notamment Hyperlan2 et 802.11a, ont des bandes allouées de :
- [5,15 GHz ; 5,35 GHz] et [5,47 GHz ; 5,725 GHz] en Europe,
- [5,15 GHz ; 5.35 GHz] et [5,725 GHz ; 5,825 GHz] aux Etats-Unis,
- [5,15 GHz ; 5,35 GHz] au Japon.

De tels systèmes sont des perturbateurs potentiels pour un récepteur UWB car ils peuvent présenter des puissances de signal bien supérieures aux puissances normalisées dans les standards UWB.

Ces perturbateurs sont donc pénalisants pour les dispositifs UWB car ils émettent des signaux interférents pour ces dispositifs et diminuent leur bande passante.

En effet, en présence d'un tel système perturbateur, l'amplificateur de signaux à faibles puissances (dénommé LNA, sigles en Anglais pour 'Low Noise Amplifier') et le convertisseur des signaux analogiques en signaux numériques (dénommé CAN) des dispositifs UWB sont saturés. Ce qui provoque que l'impulsion UWB ne peut pas être détectée correctement.

Il est connu de filtrer certaines fréquences pour protéger un dispositif en réception ou pour bloquer des émissions d'un dispositif afin de ne pas interférer avec des communications existantes par ailleurs au moyen de filtres rejecteurs pour les bandes de fréquences où il peut y avoir des interférences. Voir notamment, la demande de brevet US-A-2003/0090436 qui décrit différentes antennes UWB munie d'un filtre réjecteur formée par une partie non conductrice de l'élément rayonnant.

Le document US-A-2002/0154614 décrit un filtre réjecteur adaptatif, et le document WO-A-03/103090 divulgue une antenne à tente reconfigurable.

La présente invention découle d'une constatation propre à l'invention selon laquelle ces filtres réjecteurs diminuent de façon permanente la bande passante des dispositifs auxquels ils sont associés, alors que les signaux interférents ne sont pas forcément permanents, voire n'existent pas.

La présente invention résout au moins le problème cité ci-dessus, à savoir la présence continue du filtre réjecteur et donc la diminution pénalisante de bande passante correspondante à ce filtre, même en absence de signaux interférents.

L'invention concerne une antenne comprenant au moins un dispositif rayonnant, muni d'un filtre réjecteur associé à une bande de fréquences d'un signal interférent, caractérisée en ce que ce filtre réjecteur est adaptatif, de façon à être actif lorsque le signal interférent est détecté et sa puissance est supérieure à un seuil, ce filtre adaptatif étant désactivé lorsque la puissance détectée de ce signal interférent est inférieur au seuil.

Grâce à l'invention, le filtre réjecteur de l'antenne n'est activé, de manière dynamique et adaptative, que lorsqu'une puissance ou intensité, supérieure à un certain seuil, de signal interférent est détectée.

Une telle antenne présente l'avantage d'être dans ce cas protégée en réception et de ne pas interférer avec les signaux interférents en émission.

Notamment, on évite la saturation du convertisseur des signaux analogiques en signaux numériques en présence de signaux interférents.

De plus, une telle antenne présente aussi l'avantage de ne pas avoir sa bande passante limitée en l'absence de signaux interférents.

De fait, en l'absence de signal interférent ou si l'intensité de ce signal repasse en dessous d'un certain seuil, le filtre réjecteur est désactivé et la bande passante de l'antenne n'est pas réduite.

Le filtre réjecteur peut être intégré dans l'antenne, d'où des pertes d'insertion limitées, une compacité améliorée pour l'antenne et un coût réduit pour l'antenne.

Les problèmes de facteur de bruit liés à l'intégration des filtres entre l'antenne et le convertisseur de signaux analogiques en signaux numériques sont supprimés par cette invention.

Dans une réalisation, l'antenne est apte à recevoir ou à émettre des signaux dans la bande de fréquence de [3,1 GHz ; 10,6 GHz].

Selon une réalisation, le filtre réjecteur comprend au moins une partie non conductrice dans le dispositif rayonnant.

Dans une réalisation, la partie non conductrice a une dimension égale à la moitié de la longueur d'onde centrale d'un signal interférent qu'on souhaite filtrer pour la réception ou protéger pour l'émission, si ce signal est détecté.

Selon une réalisation, la partie non conductrice est pontée par des moyens de commutation reliant ses bords conducteurs.

Dans une réalisation, les moyens de commutation comprennent une diode ou un système électromécanique.

Selon une réalisation, des moyens de détection d'un signal interférent sont associés à l'antenne.

Dans une réalisation, les moyens de détection comprennent au moins un comparateur pour comparer le niveau du signal interférent avec le seuil associé à ce signal.

Selon une réalisation, des moyens de commande des moyens de commutation sont associés à l'antenne.

Dans une réalisation, les moyens de commande ouvrent les moyens de commutation associés à un signal interférent quand la puissance de ce signal interférent dépasse le seuil associé à ce signal.

Selon une réalisation, les moyens de commande ferment les moyens de commutation associés à un certain signal interférent quand la puissance de ce signal interférent passe sous le seuil associé à ce signal.

Dans une réalisation, l'antenne est réalisée sur un circuit imprimé.

Selon une réalisation, le dispositif rayonnant est un dipôle comportant deux éléments rayonnants.

Dans une réalisation, les éléments rayonnants ont une forme circulaire ou elliptique.

Selon une réalisation, le dispositif rayonnant comprend au moins deux filtres réjecteurs.

L'invention concerne aussi un dispositif rayonnant, muni d'un un filtre réjecteur, caractérisé en ce que le filtre réjecteur est adaptatif afin d'être mis en oeuvre dans une antenne selon l'une des réalisations précédentes.

D'autres caractéristiques et avantages de l'invention apparaîtront avec la description effectuée ci-dessous à titre d'exemple non limitatif en se référant aux figures ci-jointes sur lesquelles :
- La figure la représente une réalisation d'un dispositif rayonnant d'une antenne conforme à l'invention,
- Les figures 1b, 1c et 1d représentent des simulations du taux d'ondes stationnaires d'un dispositif rayonnant conforme à l'invention,
- La figure 2 représente schématiquement des moyens de commutation pour un dispositif conforme à l'invention et
- La figure 3 représente schématiquement les moyens de détection et les moyens de commande associés à une antenne conforme à l'invention.

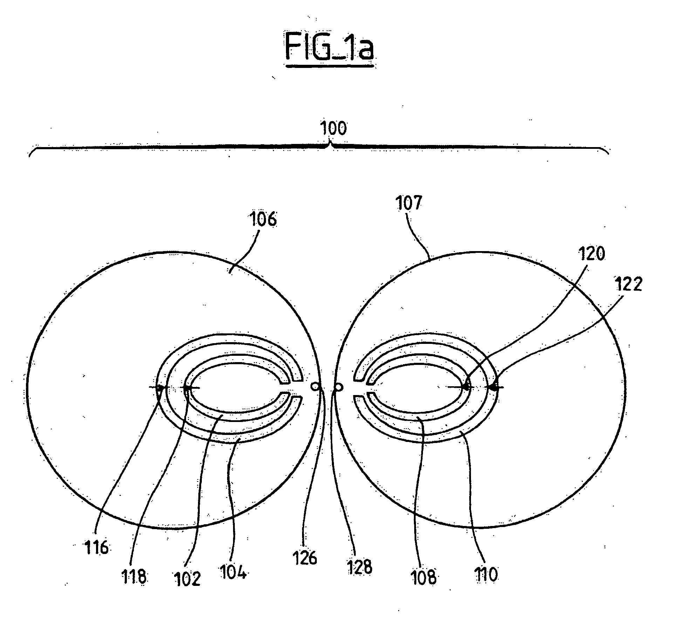

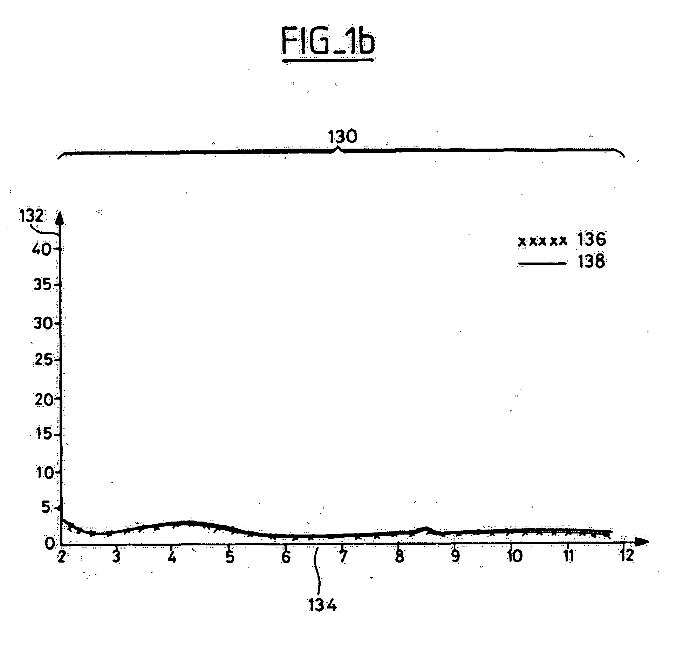

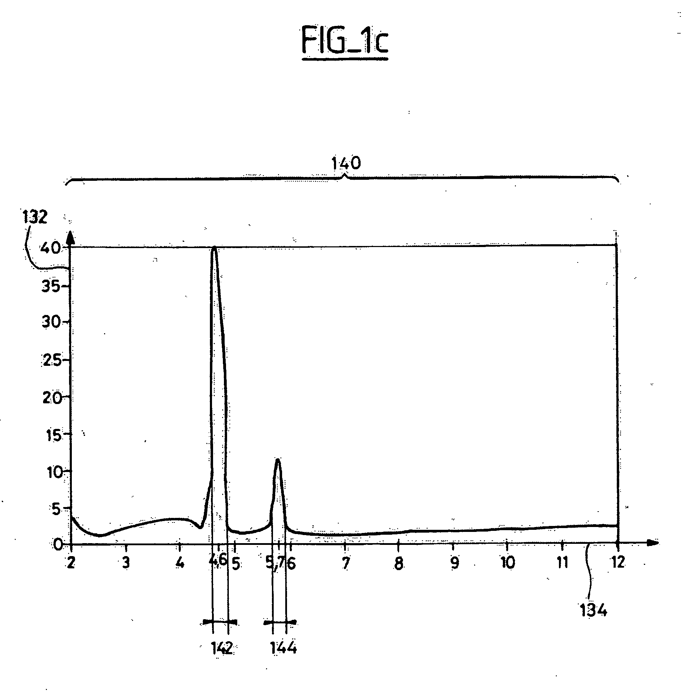

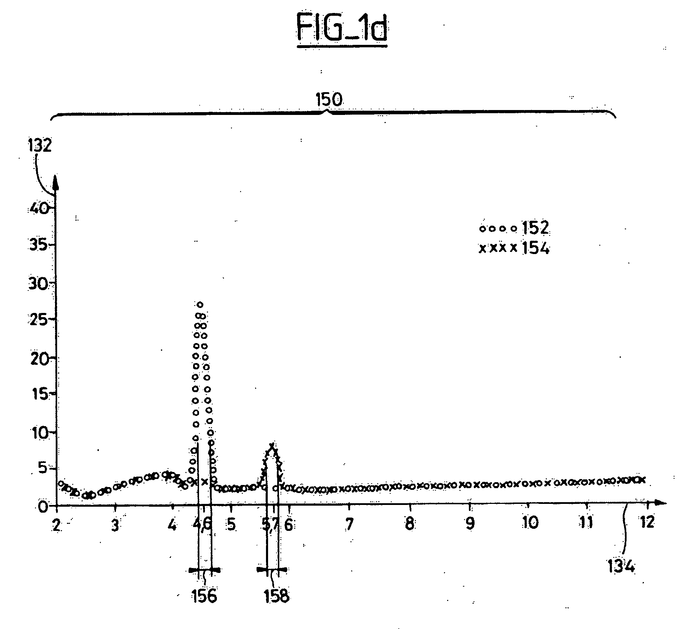

La figure 1 représente une réalisation d'un dispositif 100 rayonnant d'une antenne conforme à l'invention. Dans cette réalisation, le dispositif 100 rayonnant comprend un dipôle. Ce dispositif 100 rayonnant large bande comprend deux bras circulaires 106 et 107.

Le diamètre des bras circulaires est de 24mm tandis qu'ils sont séparés l'un de l'autres d'une distance de 1mm. Ces bras circulaires sont réalisés en un matériau conducteur ou sont recouverts d'un matériau conducteur.

L'alimentation de ces bras circulaires se fait au travers des points 126 et 128 de connexion.

Deux filtres réjecteurs ont été intégrés à ce dispositif 100 rayonnant.

Le premier est situé autour d'une fréquence de 4,6 GHz: il est appelé filtre basse fréquence ou filtre BF.

Ce filtre est réalisé par deux parties 104 et 110 non conductrices, chacune ayant une longueur 32 mm et une largeur de 0.5 mm.

Ces deux parties 104 et 110 non conductrices sont pontées par des moyens BF 116 et 122 de commutation qui peuvent être ouverts ou fermés. Si ces moyens de commutation BF 116 et 122 sont ouverts, ces moyens de commutation BF 116 et 122 ne sont pas conducteurs et le filtre réjecteur BF est actif autour d'une fréquence de 4,6 GHz.

Si ces moyens BF 116 et 122 sont fermés, ces moyens BF 116 et 122 de commutation sont conducteurs, faisant alors disparaître le filtre réjecteur de 4,6 GHz.

Le second filtre réjecteur est situé autour d'une fréquence de 5,7 GHz: il est appelé filtre haute fréquence ou filtre HF. Il comprend deux parties 102 et 108 non conductrices, chacune ayant une longueur 26 mm et de largeur 0.4 mm.

Ces deux parties 102 et 108 non conductrices sont pontées par des moyens HF 118 et 120 de commutation qui peuvent être ouverts ou fermés. Si ces moyens HF 118 et 120 de commutation sont ouverts, ces moyens HF 118 et 120 de commutation ne sont pas conducteurs et le filtre réjecteur HF est actif autour d'une fréquence de 5,7 GHz.

Si ces moyens HF 118 et 120 de commutation sont fermés, ces moyens HF 118 et 120 de commutation sont conducteurs, faisant ainsi disparaître le filtre réjecteur de 5,7 GHz.

Lorsque les moyens HF 118 et 120 et les moyens BF 116 et 122 sont fermés (dits aussi actifs), les deux filtres réjecteurs sont désactivés et le dispositif 100 rayonnant se comporte comme un dipôle sans filtre réjecteur (notamment sans parties 102, 104, 108 ou 110 non conductrices).

Lorsque les moyens BF 116 et 122 sont fermés et les moyens HF 118 et 120 sont ouverts (dits aussi inactifs), alors un filtre de réjection est actif en haute fréquence (autour de 5,7 GHz).

Lorsque les moyens BF 116 et 122 sont ouverts et les moyens HF 118 et 120 sont fermés, alors un filtre de réjection est actif en basse fréquence (autour de 4,6 GHz).

Lorsque les moyens BF 116 et 122 sont ouverts et les moyens HF 118 et 120 sont ouverts, alors un filtre de réjection est actif en basse fréquence (autour de 4,6 GHz) et un filtre de réjection est actif en haute fréquence (autour de 5,7 GHz).

Les moyens BF 116, les moyens BF 122, les moyens HF 118 et les moyens HF 120 comprennent chacun au moins une diode, un système micro-électromécanique ou tout autre système pouvant être commandé pour être ouvert ou fermé, c'est à dire respectivement non conducteur ou conducteur.

Tous ces résultats sont validés par des simulations. Les figures 1b, 1c et 1d sont des exemples des résultats obtenus.

La figure 1b est un diagramme 130 donnant la courbe du taux d'ondes stationnaires appelé VSWR (en anglais 'Voltage Standing Wave Ratio') du dispositif 100 de la figure 1a en ordonnées 132 en fonction de la fréquence en GHz en abscisses 134 sur une plage de fréquence de [2 GHz - 12 GHz].

La courbe 136 est celle obtenue avec un dispositif rayonnant sans filtre à réjection.

La courbe 138 est obtenue avec un dispositif 100 rayonnant intégrant les parties non métallisées 102, 104, 108 et 110, les moyens 116, 118, 120 et 122 de commutation étant fermés (dits aussi conducteurs).

On remarque que les deux courbes se superposent, ce qui montre que les filtres réjecteurs du dispositif 100 rayonnant sont complètement annulés. Le dispositif 100 se comporte alors comme un dispositif rayonnant sans parties non métalliques. Ce dispositif 100, et donc l'antenne qui l'intègre, ne soufre alors d'aucune perte de bande passante quand ses filtres réjecteurs sont désactivés.

La figure 1c représente le diagramme 140 donnant le taux VSWR en ordonnées 132 en fonction de la fréquence en GHz (abscisses 134), de façon analogue à la figure 1b, dans le cas où les moyens 116, 118, 120 et 122 de commutation sont ouverts (dits aussi non conducteurs).

On remarque la valeur importante du taux VSWR pour d'étroites plages 142 et 144 de fréquences autour des valeurs 4,6 GHz et 5,7 GHz, ce qui implique une forte réjection pour ces plages 142 et 144.

Les deux filtres réjecteurs réalisent donc leurs fonctions de réjection pour des plages 142 et 144 de fréquences.

La figure 1d est un diagramme 150 donnant :
- La courbe 152 de taux VSWR en ordonnées 132 en fonction de la fréquence en GHz (en abscisses 134) pour des moyens BF 116 et 122 de commutation ouverts: le filtre réjecteur BF est actif autour d'une fréquence de 4,6 GHz et le taux VSWR est important dans une étroite bande 156 autour de 4,6 GHz.
- La courbe 154 de taux VSWR en ordonnées 132 en fonction de la fréquence en GHz (en abscisses 134) pour des moyens HF 118 et 120 de commutation ouverts (moyens BF 116 et 122 de commutation fermés) : le filtre réjecteur HF est actif autour d'une fréquence de 5,7 GHz et le taux VSWR est important dans une étroite bande 158 autour de 5,7 GHz.

Ainsi, la simulation permet de vérifier la possibilité d'activer soit le filtre réjecteur BF, soit le filtre réjecteur HF de façon indépendante.

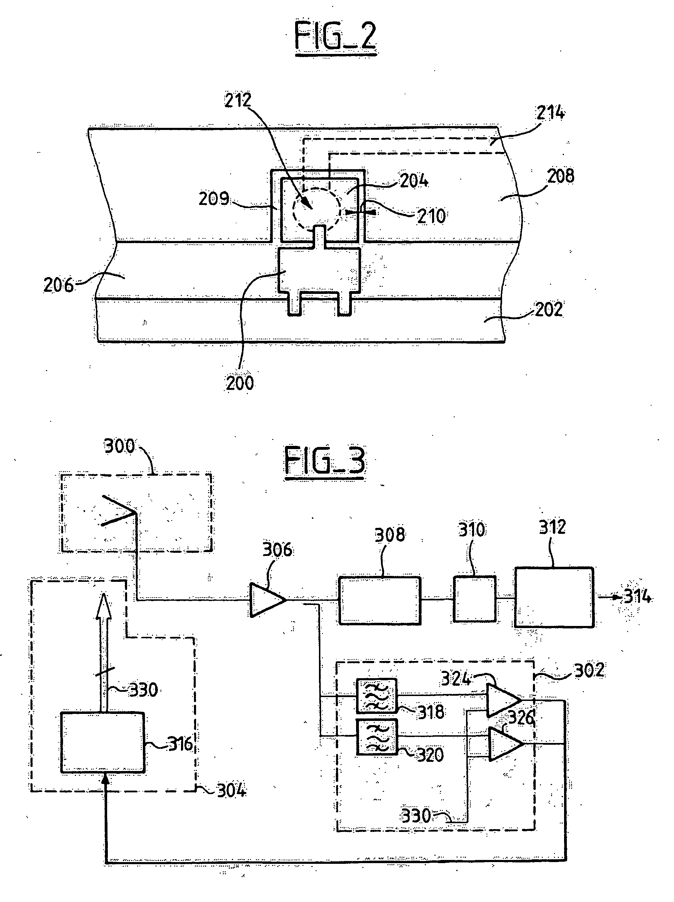

La figure 2 est une représentation schématique d'une réalisation des moyens de commutation pour une réalisation du dispositif rayonnant sur un circuit imprimé.

Les deux bras circulaires du dispositif rayonnant sont alors gravés sur une face. Une partie est non métallisée pour créer les filtres réjecteurs.

Dans cette réalisation, une diode 200 montée en surface, soudée sur une première partie 202 métallique d'un bras circulaire et une deuxième partie 204 métallique, ponte une partie 206 non métallisée ayant une constante diélectrique ε_{R}.

La partie 204 métallique est séparée de la partie 208 métallique par un canal 209 de diélectrique qui l'entoure. Ce canal a une largeur 210 de canal.

Cette largeur 210 de canal bloque la transmission de courant continu nécessaire à la commande de la diode qui peut arriver par la partie métallique 208 et qui pourrait perturber le fonctionnement de la diode.

Mais cette largeur 210 de canal laisse passer le signal haute fréquence. Une autre réalisation possible consiste à mettre en place des capacités, entre les parties 208 et 204 métalliques, ces capacités étant aptes à réaliser la même fonction.

L'alimentation DC des diodes est assurée par un via 212 et une ligne 214.

La figure 3 représente schématiquement des moyens 302 de détection et des moyens 304 de commande associés au dispositif 300 de rayonnement conforme à l'invention.

Le signal provenant du dispositif 300 est envoyé à l'amplificateur 306, dénommé LNA (en anglais 'Low Noise Amplificator', c'est à dire amplificateur améliorant le rapport signal à bruit).

Ensuite, les signaux propres au dispositif 300, comme par exemple les signaux UWB, passent dans un corrélateur 308 qui permet de retrouver l'information, puis dans un convertisseur 310 analogique-numérique.

Ensuite, les données sont traitées en bande de base dans des moyens 312 de gestion pour fournir des données 314.

Par ailleurs, des moyens 302 de détection de signaux interférents se connectent aussi à la sortie du LNA 306. Ces moyens 302 de détection contiennent une batterie de filtres 318 et 320, en nombre égal au nombre de filtres réjecteurs présents dans l'élément rayonnant 300 qui est dans cette réalisation égal à deux. Chacun de ces filtres 318 et 320 analyse les fréquences, dites fréquences à surveiller, pour lesquelles on a créé des filtres réjecteurs dans le dispositif 300 en prévision de signaux interférents.

Les moyens 302 de détection contiennent aussi des comparateurs 324 et 326 qui comparent la puissance des signaux interférents détectés à un seuil 330.

Si la puissance des signaux interférents est en-dessous de ce seuil 330, aucune action n'est prise. Si cette puissance dépasse le seuil 330 pour un ou plusieurs fréquences à surveiller, alors les moyens de détections communiquent cette information à des moyens 304 de commande, pour ouvrir les moyens de commutation correspondants au niveau du dispositif 300.

Si cette puissance vient alors à devenir inférieure au seuil 330, alors les moyens de détections communiquent cette information aux moyens 304 de commande, pour fermer les moyens de commutation correspondants.

Ces moyens de commandes contiennent une mémoire 316 PROM (en anglais 'Programmable Readable Only Memory', c'est à dire mémoire programmable à lecture seule).

La mémoire 316 PROM commande les moyens de commutation présents dans le dispositif 300 (confère figure 1) pour annuler ou mettre en fonctionnement les filtres réjecteurs associés par un bus 330 de commande (la tension délivrée correspond soit à un bit '0' soit à un bit '1') via un circuit de polarisation.

L'autre accès de chacun des moyens de commutation est connecté à la partie métallique du bras circulaire du dipôle, et est relié à la mémoire PROM par un fil de masse.

Cette réalisation particulière utilise donc deux fils de commande plus un fil de masse par bras, c'est-à-dire six fils au total.

Cette invention est susceptible de multiples variantes. Notamment, le nombre de filtres réjecteurs peut être variable (un seul, deux comme dans la réalisation précédente ou supérieur à deux).

De plus, la forme des filtres peut être variable. La forme circulaire de la réalisation citée ci-dessus n'est qu'une possibilité. On peut en effet réaliser l'invention avec d'autres formes en fonction des besoins d'intégration de plusieurs filtres.

Cette solution est utilisable en réception pour éviter la perte d'information, mais aussi à l'émission pour supprimer des bandes de fréquence particulières présélectionnées ou commutables qui peuvent être troublées par les signaux émis par le dispositif rayonnant , et plus largement par l'antenne.

## Revendications

1. Antenne comprenant au moins un dispositif (100, 300) rayonnant, muni d'un filtre réjecteur associé à une bande de fréquences d'un signal interférent, le filtre réjecteur comportant au moins une partie non-conductrice (102, 104, 108, 110, 206) dans au moins un des dispositifs rayonnants (100, 300),**caractérisée en ce que** la partie non-conductrice (102, 104, 108, 110, 206) est pontée par des moyens de commutation (116, 118, 120, 122) reliant les bords conducteurs dudit filtre réjecteur pour activer ou désactiver le filtre réjecteur et **en ce que** le filtre comporte
- des moyens (302) de détection d'un signal interférent associés à l'antenne pour détecter l'absence de signal interférent, si la puissance détectée de ce signal interférent est inférieure à un seuil (330) ou la présence de signaux interférents, si la puissance détectée de ce signal dépasse le dit seuil (330) ;et
des moyens (304) de commande des moyens (116 ,118, 120, 122) de commutation associés à la détection des signaux interférents à l'antenne pour désactiver le filtre lorsque ladite puissance détectée est inférieure au seuil, le filtre étant activé dans l'autre cas..

2. Antenne selon la revendication 1, **caractérisée en ce qu'**elle est apte à recevoir ou à émettre des signaux dans la bande de fréquence de [3,1 GHz ; 10,6 GHz].

3. Antenne selon la revendication 1, **caractérisée en ce que en ce que** la partie (102, 104, 108, 110, 206) non conductrice a une dimension égale à la moitié de la longueur d'onde centrale d'un signal interférant qu'on souhaite filtrer pour la réception ou protéger pour l'émission, si ce signal est détecté.

4. Antenne selon la revendication 1, **caractérisée en ce que** les moyens (116,118, 120, 122) de commutation comprennent une diode (200) ou un système électromécanique.

5. Antenne selon la revendication 4, **caractérisée en ce que** les moyens (302) de détection comprennent au moins un comparateur (324, 326) pour comparer le niveau du signal interférent avec le seuil (330) associé à ce signal.

6. Antenne selon l'une des revendications précédentes, **caractérisée en ce que** le dispositif (100, 300) rayonnant est un dipôle (100) comportant deux éléments (106, 107) rayonnants.

7. Antenne selon l'une des revendications précédentes, caractérisée en ce le dispositif (100, 300) rayonnant comprend au moins deux filtres réjecteurs.

## Patentansprüche

1. Antenne mit mindestens einer Strahlungsvorrichtung (100, 300) mit einem Sperrfilter, das einem Frequenzband eines interferierenden Signals zugeordnet ist, wobei das Sperrfilter mindestens einen nichtleitenden Teil (102, 104, 108, 110, 206) in mindestens einer der Strahlungsvorrichtungen (100, 300) aufweist, **dadurch gekennzeichnet, dass** der nichtleitende Teil (102, 104, 108, 110, 206) durch Schaltmittel (116, 118, 120, 122) überbrückt wird, welche die leitenden Ränder des Sperrfilters verbinden, um das Sperrfilter zu aktivieren bzw. zu deaktivieren, und dass das Filter Folgendes aufweist:
- Mittel (302) zum Erfassen eines interferierenden Signals, welche der Antenne zugeordnet sind, um das Ausbleiben eines interferierenden Signals zu erfassen, wenn die erfasste Leistung dieses interferierenden Signals eine Schwelle (330) unterschreitet, bzw. um das Vorhandensein von interferierenden Signalen zu erfassen, wenn die erfasste Leistung dieses Signals die Schwelle (330) überschreitet, und
- Mittel (304) für die Steuerung der Schaltmittel (116, 118, 120 ,122), welche der Erfassung der interferierenden Signale an der Antenne zugeordnet sind, um das Filter zu deaktivieren, wenn die erfasste Leistung die Schwelle unterschreitet, wobei das Filter anderenfalls aktiviert wird.

2. Antenne nach Anspruch 1, **dadurch gekennzeichnet, dass** sie geeignet ist, Signale in dem Frequenzband von [3,1 GHz; 10,6 GHz] zu empfangen bzw. zu senden.

3. Antenne nach Anspruch 1, **dadurch gekennzeichnet, dass** der nichtleitende Teil (102, 104, 108, 110, 206) eine Abmessung aufweist, welche der Hälfte der zentralen Wellenlänge eines interferierenden Signals entspricht, das für den Empfang filtriert bzw. für das Senden geschützt werden soll, wenn dieses Signal erfasst wird.

4. Antenne nach Anspruch 1, **dadurch gekennzeichnet, dass** die Schaltmittel (116, 118, 120, 122) eine Diode (200) bzw. ein elektromechanisches System umfassen.

5. Antenne nach Anspruch 4, **dadurch gekennzeichnet, dass** die Erfassungsmittel (302) mindestens einen Komparator (324, 326) umfassen, um den Pegel des interferierenden Signals mit der diesem Signal zugeordneten Schwelle (330) zu vergleichen.

6. Antenne nach einem der vorhergehenden Ansprüche, **dadurch gekennzeichnet, dass** die Strahlungsvorrichtung (100, 300) ein Dipol (100) mit zwei Strahlungselementen (106, 107) ist.

7. Antenne nach einem der vorhergehenden Ansprüche, **dadurch gekennzeichnet, dass** die Strahlungsvorrichtung (100, 300) mindestens zwei Sperrfilter aufweist.

## Claims

1. Antenna comprising at least one radiating device (100, 300), equipped with a rejector filter associated with a frequency band of an interfering signal, the rejector filter comprising at least one non-conductive part (102, 104, 108, 110, 206) in at least one of the radiating devices (100, 300), **characterised in that** the non-conductive part (102, 104, 108, 110, 206) is bridged by switching means (116, 118, 120, 122) linking the conductive edges of said rejector filter in order to activate or deactivate the rejector filter and **in that** the filter comprises means (302) for detecting an interfering signal associated with the antenna in order to detect the absence of interfering signal, if the detected power of this interfering signal is less than a threshold (330) or the presence of interfering signals, if the detected power of this signal exceeds said threshold (330); and
means (304) for controlling the switching means (116 ,118, 120, 122) associated with the detection of interfering signals at the antenna in order to deactivate the filter when said detected power is less than the threshold, the filter being activated in the other case.

2. Antenna according to claim 1, **characterised in that** it is able to receive or to transmit signals in the frequency band of [3.1 GHz; 10.6 GHz].

3. Antenna according to claim 1, **characterised in that** the non-conductive part (102, 104, 108, 110, 206) has a dimension equal to half the central wavelength of an interfering signal that it is desired to filter for reception or to protect for transmission, if this signal is detected.

4. Antenna according to claim 1, **characterised in that** the switching means (116,118, 120, 122) comprise a diode (200) or an electromechanical system.

5. Antenna according to claim 4, **characterised in that** the detection means (302) comprise at least one comparator (324, 326) for comparing the level of the interfering signal with the threshold (330) associated with this signal.

6. Antenna according to one of the preceding claims, **characterised in that** the radiating device (100, 300) is a dipole (100) comprising two radiating elements (106, 107).

7. Antenna according to one of the preceding claims, **characterised in that** the radiating device (100, 300) comprises at least two rejector filters.
